# EUROPEAN PATENT APPLICATION

(11) **EP 1 284 463 A2**
(43) Date of publication of application: **19.02.2003**
(21) Application number: 02018352.1
(22) Date of filing: 14.08.2002
(51) Int. Cl.: G06F 17/30

(54) **Display control method and apparatus**

(30) Priority: 15.08.2001 JP 2001246464; 14.09.2001 JP 2001279377
(71) Applicant: Square Co., Ltd., Meguro-ku, Tokyo 153-8688 (JP)
(72) Inventor: Yoshioka, Mitsuo, c/o Square Co., Ltd., Tokyo 153-8688 (JP)
(74) Representative: Grünecker, Kinkeldey, Stockmair & Schwanhäusser Anwaltssozietät

(57) **Abstract**

Display control improves performance and operability of information processing apparatuses. Multi-link data referred to in a BODY part is defined in advance in a HEAD part of a NML document. By parsing the HEAD part, the multi-link data is stored in advance in a client system as a multi-link list. In parsing the BODY part, buttons and the multi-link list stored in the client system are linked to one another by a reference name described on an attribute of a button to be displayed. When a viewer detects a selecting operation of a button, a pop-up menu having link buttons is displayed on the basis of the multi-link list linked to the button without displaying a new page.

## Description

### CROSS REFERENCE TO RELATED APPLICATIONS

The present disclosure relates to subject matter contained in Japanese Patent Application No.2001-246464, filed on August 15, 2001, and Japanese Patent Application No.2001-279377, filed on September 14, 2001, the disclosures of which are expressly incorporated herein by reference in their entireties.

### BACKGROUND OF THE INVENTION

### 1. FIELD OF THE INVENTION

This invention relates to display control. More particularly, it relates to display control in which a file of documents described by a markup language is read in and text and images having a link function to other pages are displayed.

### 2. DESCRIPTION OF THE RELATED ART

Conventionally, there has been used a system in which web content information is obtained by accessing a web server system from a client system connected to a communications network, such as the Internet. In the system, the obtained web content information is displayed on a display screen of a viewer (software for displaying data; also called as a browser) of the client system so that the user can view the content information.

The web content information is stored in the web server system as, for example, a file of HTML documents described by HTML (hypertext markup language) as a markup language. A user of the client system sends a URL (uniform resource locator) that designates a storage location of a desired HTML file from the activated viewer to the web server system and obtains the designated HTML file. As a communications protocol, HTTP (hypertext transfer protocol) may be used. The viewer of the client system includes a parser for parsing a file described by the markup language. For example, the viewer includes an HTML parser for parsing an HTML file. The viewer, upon receiving the HTML file, displays HTML documents of the file based upon parsing results.

Since the form (how to use tags, etc.) of URL, HTTP and HTML are well known to a person skilled in the art, detailed explanation will be omitted. However, the HTML tags are explained in, for example, "HTML TAG DICTIONARY" written by ANKU and published by SHOEISHA (December 10, 1999, first edition, 10th printing).

A display image of one page may be displayed using one HTML document. However, it is possible to provide objects such as graphical user interfaces (GUIs: such as buttons, scrolls) on the screen, text, and images, with a so-called page link function. The page link function enables the object to obtain the file and display other pages, when the object is selected by a mouse click, etc. This is realized by describing, in an HTML document, a URL of a page (HTML file) linked to an object to be described, in association with information of the object.

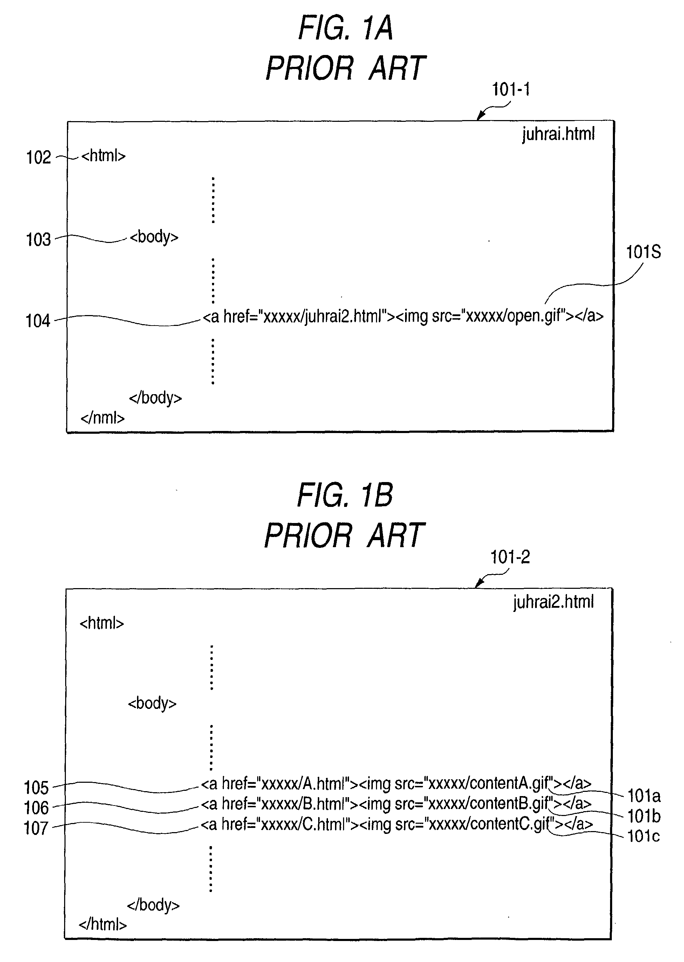

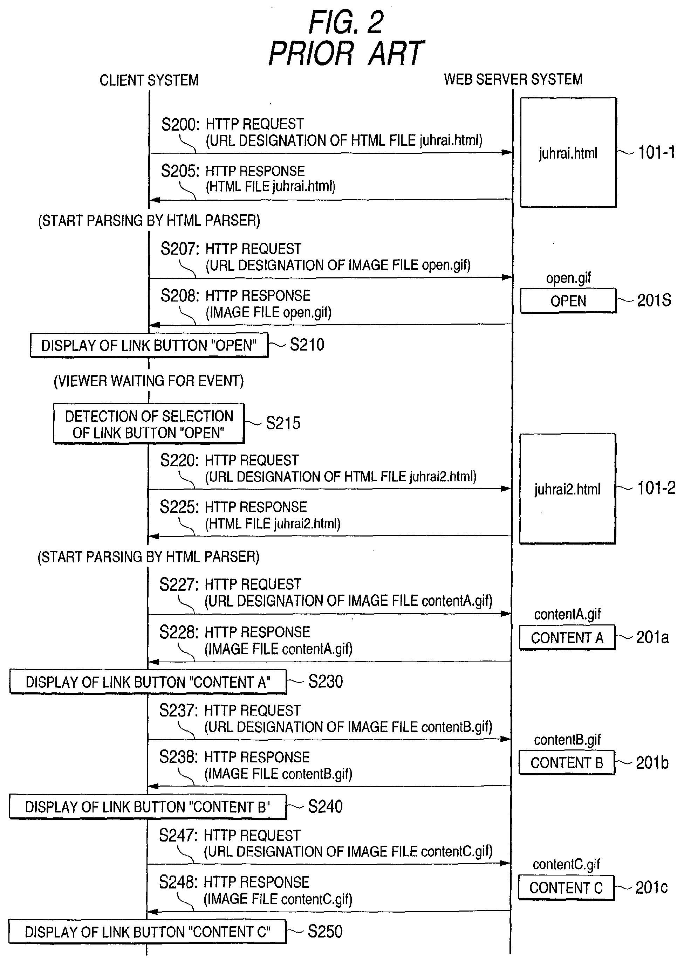

A related system will now be described with reference to Figs.1 to 3 in which the viewer of the client system obtains an HTML file from the web server system and displays it. Figs. 1A and 1B are exemplary diagrams of an HTML file stored in the web server system. Fig.1A shows an HTML file juhrai.html. Fig. 1B shows an HTML file juhrai2.html. Fig. 2 is a sequence diagram of HTTP communications between the viewer of the client system and the web server system.

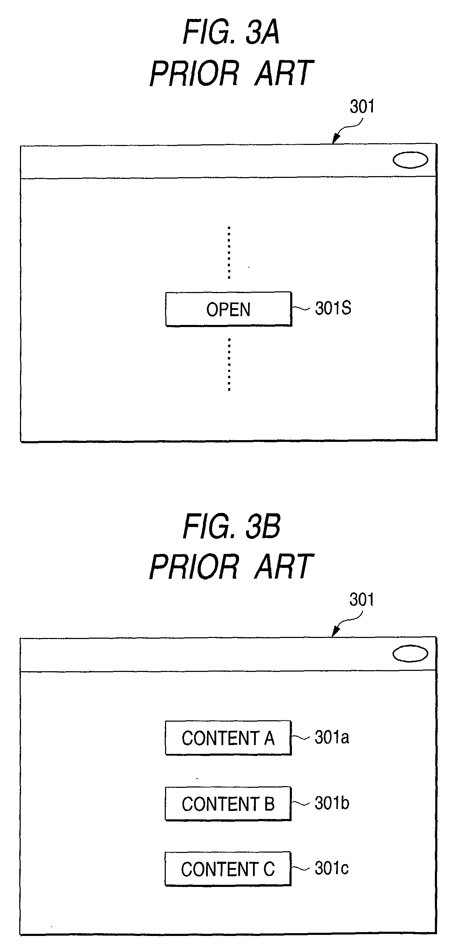

Figs.3A and 3B show display screens displayed by the viewer in accordance with the obtained HTML file. Fig.3A shows a display screen including a link button "OPEN" 301s having a link function. Fig.3B shows a display screen to be displayed when the link button "OPEN" 301s is selected. In Fig.3B, the display screen contains a link button "CONTENT A" 301a, a link button "CONTENT B" 301b and a link button "CONTENT C" 301c. The link buttons 301a, 301b and 301c have the link function.

In Fig.1A, the HTML file juhrai.html 101-1 contains <html> tag 102, <body> tag 103, <img src="open.gif"> tag 101s and <a href="xxxxx/juhrai2.html"> tag 104. The viewer displays the screen image of Fig. 3A in accordance with the HTML file juhrai.html 101-1.

The <html> tag 102 declares that content between <html>-</html> tags is described by HTML. The <body> tag 103 shows that content between <body>-</body> tags is body text to be displayed on the viewer. The <img src= "xxxxx/open.gif"> tag 101s indicates that an image of an image file open.gif is to be displayed. The <a href="xxxxx/ juhrai2.html"> tag 104 indicates that content between <a href="xxxxx /juhrai2.html">-</a> tags, i.e., the image (the link button 301s "OPEN") of the image file open.gif is a link button linked to URL "xxxxx/juhrai2.html".

In Fig.1B, an HTML file juhrai.2.html 101-2 contains <html> tag, <body> tag, <img src="xxxxx/contentA.gif"> tag 101a, <img src="xxxxx/contentB.gif"> tag 101b, <img src="xxxxx/contentC.gif"> tag 101c, <a href="xxxxx/A.html"> tag 105, <a href="xxxxx/B.html"> tag 106 and <a href="xxxxx/C.html"> tag 107. The viewer displays the screen image of Fig. 3B in accordance with the HTML file juhrai2.html 101-2.

The <img src="xxxxx/contensA.gif"> tag 101a indicates that an image of the image file contentA.gif is to be displayed. The <a href="xxxxx/A.html"> tag 105 indicates that content between <a href="xxxxx/A.html">-</a> tags, i.e., the image (the link button "CONTENT A" 301a) of the image file contentA.gif is a link button linked to URL="xxxxx/A.html".

The <img src="xxxxx/contentB.gif"> tag 101b indicates that an image of the image file contentB.gif file is displayed. The <a href="xxxxx/B.html"> tag 106 indicates that content between <a href="xxxxx/B.html">-</a> tags, i.e., the image (the link button "CONTENT B" 301b) of the image file contentB.gif is a link button linked to URL="xxxxx/B.html".

The <img src="xxxxx/contensC.gif"> tag 101c indicates that an image of the image file contentC.gif is to be displayed. The <a href="xxxxx/C.html"> tag 107 shows that content between <a href="xxxxx/C.html">-</a> tags, i.e., a screen image (the link button "CONTENT C" 301c) of the image file contentC.gif is a link button linked to URL="xxxxx/C.html".

In Fig. 2, the viewer of the client system sends an HTTP request designating a URL of the HTML file juhrai.html 101-1 to the web server system in accordance with an instruction of a user (step S200). The web server system which received the HTTP request reads out the stored HTML file juhrai.html 101-1 and sends an HTTP response along with the read-out file to the client system (step S205).

When the viewer which received the HTTP response obtains the HTML file juhrai.html 101-1, the HTML parser starts parsing the HTML file juhrai.html 101-1. When the HTML parser parses the <img src="xxxxx/open.gif"> tag 101s, the viewer sends an HTTP request designating the URL of the image file open.gif (above-stated "xxxxx/open.gif") to the web server system (step S207). The web server system that received the HTTP request reads out the stored image file open.gif 201s and sends an HTTP response to the client system, along with the read-out file (step S208).

When the download of the image file open.gif 201s is completed, the viewer stores the image data of the obtained image file open.gif 201s in a frame buffer memory which develops data for use in screen display for buffering purpose, and displays the link button "OPEN"301s based upon the information of the frame buffer memory (step S210). At the same time, the viewer parses the <a href="xxxxx/juhrai2.html"> tag 104, and stores the linked URL "xxxxx/juhrai2.html" as event processing information in a memory in relation to the link button "OPEN"301s between tags of <a href="xxxxx/juhrai2.html"> - </a>.

The display image displayed on the viewer with the above processing is shown in Fig.3A. The viewer screen 301 displays the link button "OPEN" 301s. At this time, an event handler of the viewer is monitoring the occurrence of events.

When the event handler detects that a user selects the link button "OPEN" 301s by a selecting operation (step S215), the viewer sends an HTTP request designating the URL of the HTML file juhrai2.html 101-2 to the web server system based upon the URL "xxxxx/juhrai2.html" to be linked. The URL "xxxxx/juhrai2. html" serves as an event processing information of the link button "OPEN" 301s saved in the memory (step S220). The web server system that received the HTTP request reads out the stored HTML file juhrai2.html 101-2 and sends an HTTP response to the client system (step S225) along with the read-out file.

When the viewer that received the HTTP response obtains the HTML file juhrai2.html 101-2, the HTML parser starts parsing the HTML file juhrai2.html 101-2. When the HTML parser parses the <img src="xxxxx/contentA.gif"> 101a, the viewer sends an HTTP request designating the URL of the image file contentA.gif (above-stated "xxxxx/contentA.gif") to the web server system (step S227). The web server system which received the HTTP request reads out the stored image file contentA.gif 201a and sends an HTTP response to the client system (step S228) along with the read-out file.

When the download of the image file contentA.gif 201a is completed, the viewer stores the image data of the obtained image file contentA.gif 201a in a frame buffer memory and displays the link button "CONTENT A" 301a based upon the information of the frame buffer memory (step S230). At the same time, the viewer parses the <a href="xxxxx/A.html"> tag 105, and stores the linked URL "xxxxx/A.html" as event processing information in a memory in relation to the link button "CONTENT A" 301a between tags <a href="xxxxx/A.html"> - </a>.

When the HTML parser parses the <img src="xxxxx /contentB.gif"> tag 101b, the viewer sends an HTTP request designating the URL of the image file contentB.gif (above-stated "xxxxx/contentB.gif") to the web server system (step S237). The web server system that received the HTTP request reads out the stored image file contentB.gif 201b and sends an HTTP response to the client system along with the read-out file (step S238).

When the download of the image file contentB.gif 201b is completed, the viewer stores the image data of the obtained image file contentB.gif 201b in a frame buffer memory and displays the link button "CONTENT B" 301b based upon the information of the frame buffer memory (step S240). At the same time, the viewer parses the <a href="xxxxx/B.html"> tag 106, and saves the linked URL "xxxxx/B.html" as event processing information in a memory in relation to the link button "CONTENT B" 301b between tags <a href="xxxxx/B.html">- </a>.

When the HTML parser parses the <img src="xxxxx/contentC.gif"> tag 101c, the viewer sends an HTTP request designating the URL of the image file contentC.gif (above-stated "xxxxx/contentC.gif") to the web server system (step S247). The web server system that received the HTTP request reads out the stored image file contentC.gif 201c and sends an HTTP response to the client system (step S248)along with the read-out file.

When the download of the image file contentC.gif 201c is completed, the viewer stores the image data of the obtained image file contentC.gif 201c in a frame buffer memory and displays the link button "CONTENT C" 301c based upon the information of the frame buffer memory (step S250). At the same time, the viewer parses the <a href="xxxxx/C.html"> tag 107, and saves the linked URL "xxxxx/C.html" as event processing information in a memory in relation to the link button "CONTENT C" 301c between tags <a href="xxxxx/C.html"> - </a>.

A screen image displayed on the viewer by the above-described processing is shown in Fig.3B. The viewer screen 301 displays the link button "CONTENT A"301a, the link button "CONTENT B"301b and the link button "CONTENT C"301c. At this time, an event handler of the viewer is monitoring occurrence of events.

As stated above, the HTML file juhrai2.html 101-2 is used to display a page having a menu of links (hereinafter referred to as multi-link) which are linked from the screen display of Fig. 3A on the viewer as shown in Fig. 3B. When displaying the image shown in Fig.3A, the viewer uses one page of display images of the frame buffer memory developing data to be displayed on the screen. Next, when displaying the multi-link menu shown in Fig.3B linked from the screen image shown in Fig. 3A, the viewer uses another page of display images of the frame buffer memory. Furthermore, it is necessary to download, from the web server system, all of the resources (image data) of each button to be displayed in the multi-link menu shown in Fig. 3B.

In the prior art system as stated above, the viewer of the client system obtains the information described by a markup language from the server system and displays it. According to the system, in case that one page of screen image is displayed and the menu of link addresses linked therefrom is also to be displayed, the viewer has to display a new page having the menu of multiple link addresses. Furthermore, a resource used for displaying the menu of multiple link addresses has to be obtained from the server system.

Therefore, a page has to be switched one by one in order to view the menu of multiple link addresses. This makes it very difficult and complicated for users to operate the viewer. Also, as an entire system, the communications between clients and servers is complicated, and the processing load is heavy.

Consequently, the present invention has been made in view of the above-stated situation, and has a purpose to provide a display control method, an information processing apparatus and a recording medium for displaying necessary information easily and promptly.

### SUMMARY OF THE INVENTION

To accomplish such purpose, according to a first aspect of the invention, there is provided a display control method executed by an information processing apparatus which reads a file of a document described by a markup language, parses the document and displays content of the parsed document. The document includes a first description part describing link group information including pieces of link address information and being indicated by an identifier, and a second description part describing object information containing the identifier. The display control method includes generating, upon parsing the first description part, list data of the pieces of link address information, corresponding to the identifier indicating the link group information. The method further includes displaying, upon parsing the second description part, an object based upon the object information, in association with the identifier contained in the object information. The method further includes displaying items which accept a display request of each piece of information shown by each of the pieces of link address information, in reference to the generated list data, by the identifier associated with the object, when the displayed object is selected.

According to a second aspect of the invention, there is provided an information processing apparatus which reads a file of a document described by a markup language, parses the document and displays content of the parsed document. The document includes a first description part describing link group information including pieces of link address information and being indicated by an identifier. The document also includes a second description part in which object information containing the identifier is described. The information processing apparatus includes a generating system that parses the first description part and generates list data of the pieces of link address information, corresponding to the identifier indicating the link group information. The apparatus further includes a first display system that parses the second description part and displays an object based upon the object information, in association with the identifier contained in the object information. The apparatus further includes a second display system that displays items which accept a display request of each piece of information indicated by each of the pieces of link address information, by reference to the generated list data by the identifier associated with the object, when the object displayed by the first displaying system is selected.

According to a third aspect of the invention, there is provided a recording medium on which is recorded a program for causing a computer to read a file of a document described by a markup language, to parse the document, and to display content of the parsed document. The document includes a first description part describing link group information including pieces of link address information, the link group information being indicated by an identifier. The document also includes a second description part in which object information containing the identifier is described. The program causes the computer to generate, upon parsing the first description part, list data of the pieces of link address information, corresponding to the identifier indicating the link group information. The program further causes the computer to display, upon parsing the second description part, an object based upon the object information, in association with the identifier contained in the object information. The program further causes the computer to display items which accept a display request of each piece of information indicated by each of the pieces of link address information, by referring to the generated list data by the identifier associated with the object, when the object displayed in the first displaying is selected.

### BRIEF DESCRIPTION OF THE DRAWINGS

Fig. 1A shows an HTML file juhrai.html as one example of HTML files stored in a web server system in the prior art;
Fig. 1B shows an HTML file juhrai2.html as one example of HTML files stored in a web server system in the prior art;
Fig. 2 is an HTTP sequence diagram, between a viewer of a client system and a web server system in the prior art;
Fig. 3A shows a screen which includes a link button "OPEN" having a link function and is displayed on a viewer in accordance with an HTML file obtained in the prior art;
Fig. 3B shows a screen to be displayed when the link button "OPEN" is selected and a page linked to the button in the prior art;
Fig. 4 is a block diagram of a communications network service system according to an embodiment of the invention;
Fig. 5 is an explanatory view of an environment for using a home use video game machine according to an embodiment of the invention;
Fig. 6 is a block diagram of a game machine body according to an embodiment of the invention;
Fig. 7 is an explanatory view of a controller according to an embodiment of the invention;
Fig. 8 shows a structure of a software module including a program for realizing a display control according to an embodiment of the invention;
Fig. 9 is an explanatory view of a top screen of the viewer according to an embodiment of the invention;
Fig. 10A shows a screen of the viewer after a selecting operation for a game command button is carried out, the screen displaying a game list having a multi-link button "HOGE game", according to an embodiment of the invention;
Fig. 10B shows a screen of the viewer after a selecting operation for a game command button is carried out, the screen displaying a pop-up menu after the selecting operation for the multi-link button "HOGE game" is carried out, according to an embodiment of the invention;
Fig. 11 shows an example of a NML file stored in a game A server system according to an embodiment of the invention;
Fig. 12 is an HTTP sequence diagram, between the viewer of the client system and the game A server system according to an embodiment of the invention;
Fig. 13A is a flowchart of NML parser processing carried out by the client system according to an embodiment of the invention;
Fig. 13B is a flowchart of HEAD part processing carried out by the client system according to an embodiment of the invention;
Fig. 13C is a flowchart of BODY part processing carried out by the client system according to an embodiment of the invention;
Fig. 14 is an explanatory view of a multi-link list according to an embodiment of the invention; and
Fig. 15 is a flowchart of event processing carried out by the client system according to an embodiment of the invention.

### DESCRIPTION OF THE PREFERRED EMBODIMENTS

Hereinafter, preferred embodiments of the present invention will be described in detail with reference to the drawings. Portions having the same functions in the respective drawings are designated with the same reference numerals and a duplicative explanation will be omitted.

A system of the present embodiment will be explained as one function in a communications network service system provided by a network service company. The communications network service system of the embodiments provides the communications network service for which a network service company provides a server group and operates to member users through the Internet. Further, a name of the communications network service of the embodiment is called as, for example, NOL (New On-Line).

Content provided in the communications network service includes, for example, a content viewing service; sports, music, cartoon and shopping information and other various information, and a communications service; providing an environment for real-time message exchange among users and an environment of mail service. The content further includes game service, i.e., providing an environment for on-line games which are activated through the communications network.

A member user of the communications network service activates a viewer (software for displaying data) on a client system. The viewer may be used exclusively for the communications network service. Subsequently, the user accesses a server group of a network service company, and utilizes services.

The member user accesses a desired server system in the group of server systems from the client system and obtains information so that the obtained information is displayed on a display screen of the viewer of the client system for viewing.

### (SYSTEM STRUCTURE)

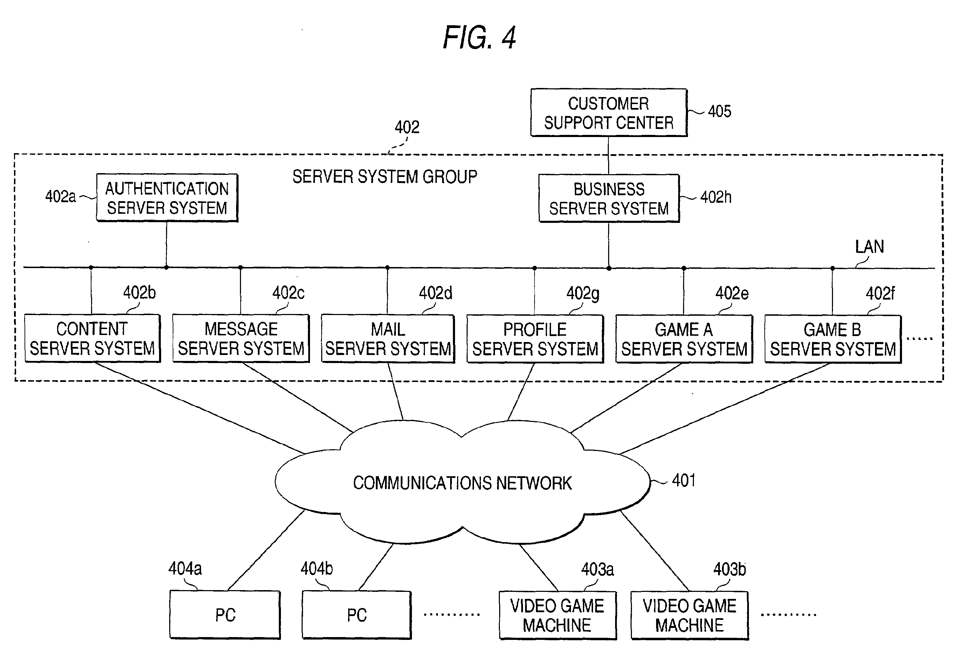

Fig. 4 is a system structural view of the communications network service system according to one embodiment of the invention. The communications network service system includes a communications network 401, a server system group 402 of a network service company, and client systems 403a, 403b, 404a and 404b. The client systems are connected to the server system 402 through the communications network 401 and used by multiple users. Furthermore, the communications network service system includes a client system 405 that is connected to the server system group 402 through a private line and used by operators in a customer support center. The server system group 402 and client systems 403a, 403b, 404a, 404b and 405 serve as computer systems, respectively.

The client systems 403a and 403b are home use video game machines. The client systems 404a and 404b are personal computers (hereinafter referred to as a PC) . The PC may operate in an OS environment such as for example, Windows (Registered Trademark) 98 of Microsoft Corporation. Since such PC system structure is well known, it will not explained in detail. The client system 403a and 403b can be activated when a program of the viewer is loaded from a CD-ROM to a memory. The client systems 404a and 404b include the viewer, which is in advance installed in a built-in HD (hard disk).

The communications network 401 connects the server system group 402 to the client systems 403a, 403b, 404a and 404b. The communications network 401 is the Internet, in one embodiment.

The server group system 402 accesses stored data, processes the data and provides a service to each client system, in response to a request from each client system. The server system group 402 includes an authentication server system 402a, a content server system 402b, a message server system 402c, a mail server system 402d, a game A server system 402e, a game B server system 402f, a profile server system 402g and a business server system 402h. The server systems are all connected through a LAN (local area network).

The authentication server system 402a manages for example, a user account of each member user (user ID (identifier)), its password and mail account. Furthermore, the authentication server system 402a may manage connection status of a user (on-line/off-line) and an address of a client machine of an on-line user.

The content server system 402b provides sports, music, cartoon and shopping information and various other information.

The messenger server system 402c provides an environment for real-time message exchange among users. Specifically, it provides an environment for a messenger application and a chat application which are activated on a client machine by a user. The messenger server system 402c mainly carries out routing (setting of an address and a path) for delivering exchange messages of the messenger application and chat messages of the chat application. The mail server system 402d provides an environment for electric mail exchange among users.

The game A server system 402e is a server system for a game whose title is "A" and the game B server system 402f is a server system for a game whose title is "B". Each game server system provides an environment for on-line gaming. A user plays such a game by activating the on-line game in the game server system from the viewer. For example, in case that the on-line game is a role playing game (a game in which a user becomes a character of the game), the user can play the role playing game with other member users.

The profile server system 402g manages each user account with respect to user profiles corresponding to the user account. The user may register his/her profile in the profile server system 402g from the viewer.

Furthermore, the profile server system 402g manages one or more handle names (hereinafter referred to as HN) of a user corresponding to the user account for each user account. The HN is a temporary name of the user, and the user participates in a game and sends a message under the HN. A user chats under a desired HN, when joining, for example, a chat room. Since the HN is registered in advance in the profile server system 402g in correspondence with the user account, the user may select the desired handle name from a list of handle names when the user begins chatting, by obtaining the list of handle names (not shown) from the profile server system 402g for viewing.

The business server system 402h carries out business processing such as management of communications network service charges, personal information (admission and resignation), customer supports and other communications network services. The business server system 402h receives requests from the client system 405 in the customer support center and carries out processing.

When transmitting and receiving data in the communications network 401 via the private line and LAN, normal protocols such as TCP/IP (transmission control protocol /internet protocol), HTTP (hypertext transfer protocol), SMTP (simple mail transfer protocol) and FTP (file transfer protocol) may be used.

Furthermore, each server system may use well-known technologies such as CGI (common gateway interface), SSI (server side include) and DBMS (database management system) in order to process associated database and other back-end programs in response to various requests from each client system.

### (CLIENT SYSTEM)

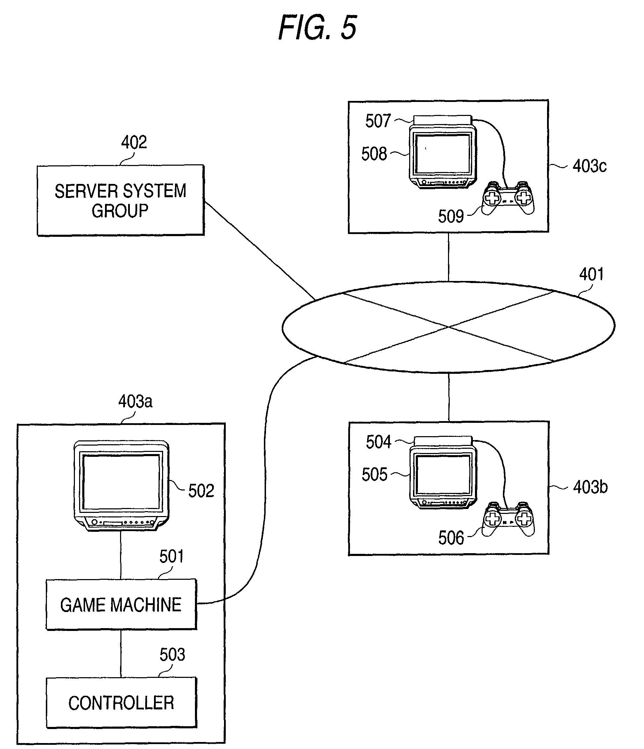

Fig.5 shows an environment for using client systems 403a, 403b and 403c as video game machines for home use. These client systems are connected to the server system group 402 through the communications network 401.

The client system 403a includes a game machine body 501, a television receiver 502 and a controller 503. Similarly, the client system 403b includes a game machine body 504, a television receiver 505 and a controller 506. The client system 403c includes a game machine body 507, a television receiver 508 and a controller 509.

The game machine body 501 activates the viewer and accesses the server system group 402. The television receiver 502 outputs image and sound data from the game machine body 501. The controller 503 inputs instructions from a user to the game machine body 501. In one embodiment, a user named YOSHIOKA accesses the server system group 402 using the client system 403a.

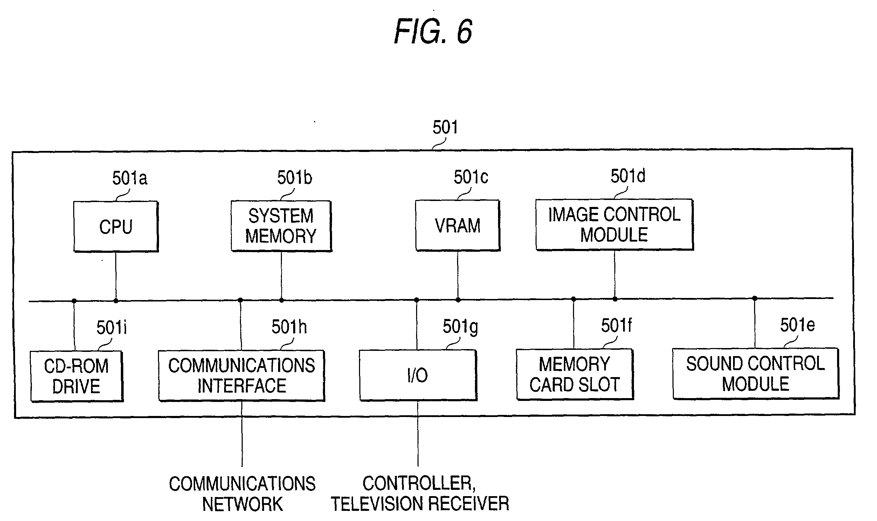

Fig. 6 shows a system structure of the game machine body 501. The game machine body 501 includes a CPU (central processing unit) 501a, a system memory 501b, a VRAM (video ram) 501c, an image control module 501d, a sound control module 501e, a memory card slot 501f, an I/O (input/output) interface 501g, a communications interface 501h and a CD-ROM drive 501i.

The CPU 501a controls all components of the game machine body 501 in accordance with control sequences of program loaded or stored in the system memory 501b. The system memory 501b includes, for example, a ROM (read only memory) and a RAM (random access memory). The ROM stores a BIOS (basic input/output system) program, and the RAM temporarily stores control data and the viewer program loaded from a CD-ROM on the CD-ROM drive 501.

The VRAM 501c develops image data to be displayed on the television receiver 502 and temporarily stores the data. The image control module 501d controls image data to be displayed on the television receiver 502. The sound control module 501e controls sound data to be output by the television receiver 502.

The memory card slot 501f is an interface into which a memory card is inserted. The card stores data which the CPU 501a makes reference to when the viewer is activated.

The I/O interface 501g inputs and outputs data between an external device such as the television receiver 502, the controller 503, and the game machine body 501. The communications interface 501h carries out communications control with the communications network 401.

The CD-ROM drive 501i drives a CD-ROM on which a program was stored and reads such a program. In an embodiment, a CD-ROM on which the viewer program was stored is read by the CD-ROM drive 501i and the viewer program is loaded to RAM of the system memory 501b.

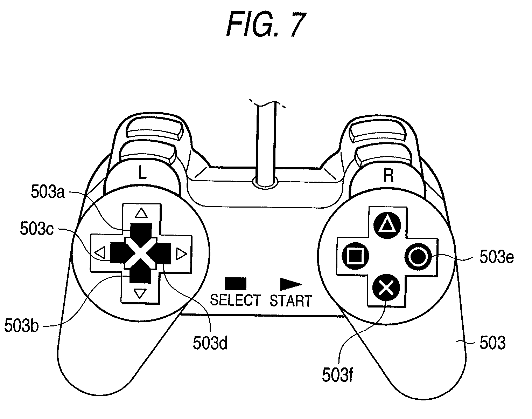

Fig. 7 shows the controller 503. Reference numerals 503a, 503b, 503c and 503d represent keys of up, down, left and right directions, respectively. The reference numeral 503e represents a circle mark button and the reference numeral 503f represents a cross mark button. A user gives instructions to the game machine body 501 by pressing these keys or buttons.

The direction keys 503a, 503b, 503c and 503d move, for example, a cursor (highlight) for designating an item on a screen of the viewer displayed on the television receiver 502 and an anchor (arrow mark) which moves in conjunction with the cursor while pointing the cursor in a corresponding direction. The circle mark button 503e is a button for enabling the cursor to select a certain item. The cross mark button 503f is a button for canceling the selecting operation or returning back to the previous operation step.

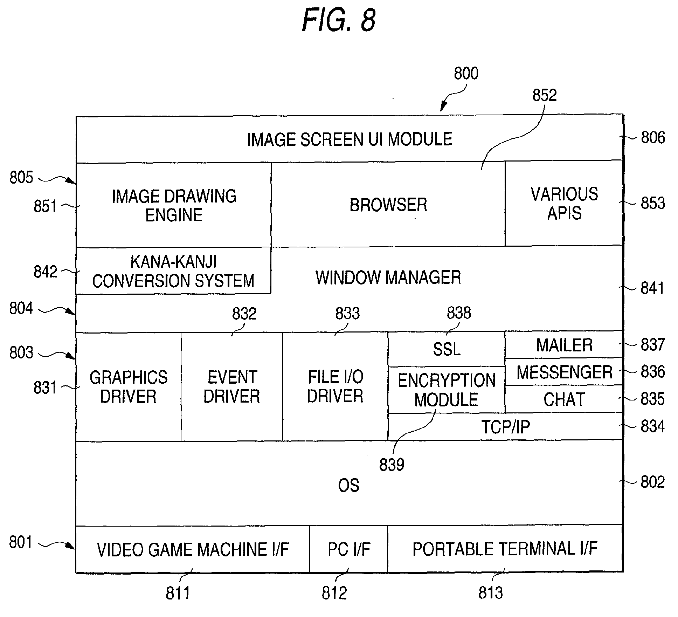

Fig.8 shows a structure of a software module including a program for realizing the display control of the client system, according to an embodiment. For example, in the game machine body 501, the CPU 501a reads out a software module 800 from a CD-ROM through the CD-ROM drive 501i. Then, the CPU 501a stores the software module 800 in RAM of the system memory 501b and executes the software module. Six layers from a first layer 801 to a sixth layer 806 makes up the software module 800.

The first layer 801 is a physical interface (IF) and includes a video game machine IF 811, a multi-purpose computer IF 812 or a portable terminal IF 813, depending on the hardware with which the software module 800 is equipped. A second layer 802 is an operating system.

A third layer 803 includes, for example, various drivers, a communications protocol, etc. The drivers include a graphics driver 831 for carrying out lettering, line-drawing, mark-out, scrolling, and font setting. The drivers also include, an event driver 832 for obtaining events from a keypad, a keyboard and a mouse and a file I/O driver 833 for controlling a file medium.

The communications protocol includes TCP/IP 834 forming an Internet layer protocol and a transport layer protocol, a chat protocol 835, a messenger protocol 836 and a mailer protocol 837 serving as application layer protocols. In addition, as the communications protocol, other protocols may be used. For example, a UDP may be used as the transport layer protocol. Also, provided are a SSL (Secure Socket Layer) 838 for ensuring the security of TCP/IP communications and an encryption module 839 for encoding and decoding data exchanged between a client and a server according to the SSL algorithm.

The fourth layer 804 includes a window manager 841 for activating various modules and managing memory resources. The fourth layer further includes a kana-kanji conversion system 842 serving as a FEP (Front End Processor), which system outputs kanji (Chinese character) candidates in response to kana (Japanese syllabary) inputs.

The fifth layer 805 includes an image drawing engine 851 for drawing an image created by such a format as PNG (Portable Network Graphics), GIF (Graphics Interchange Format), JPEG (Joint Photographic Experts Group) and MPEG (Moving Picture Experts Group). The fifth layer 805 also includes a viewer program 852 (software for use in data display; also called a browser) for parsing, for example, HTML based markup language and for displaying a screen display in accordance with tag instructions. The fifth layer 805 further includes various application programming interface (APIs) 853 which serves as an interface for communicating with each server group and a screen control common routine such as cursor control and a drawing common routine such as a menu.

The sixth layer 806 is a screen user interface (UI) module, and serves as a user interface module for setting display such as various screens, dialogs, etc.

### (EXPLANATION OF VIEWER DISPLAY OPERATION)

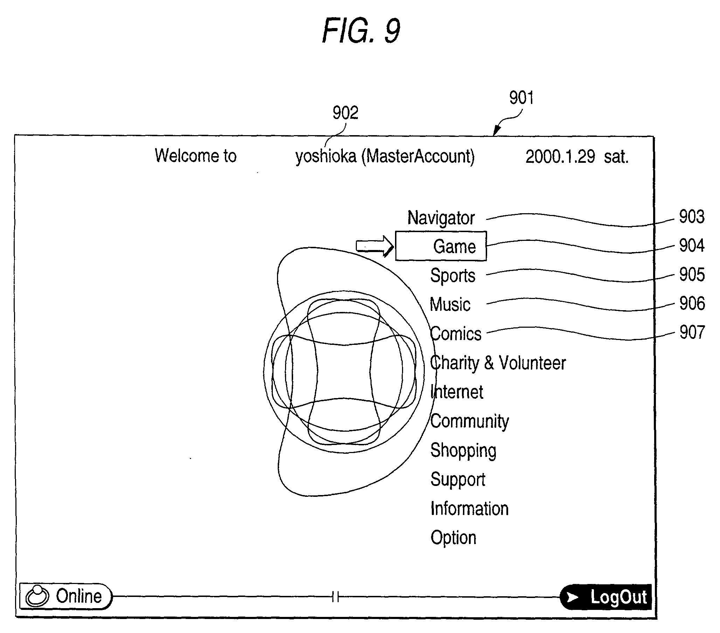

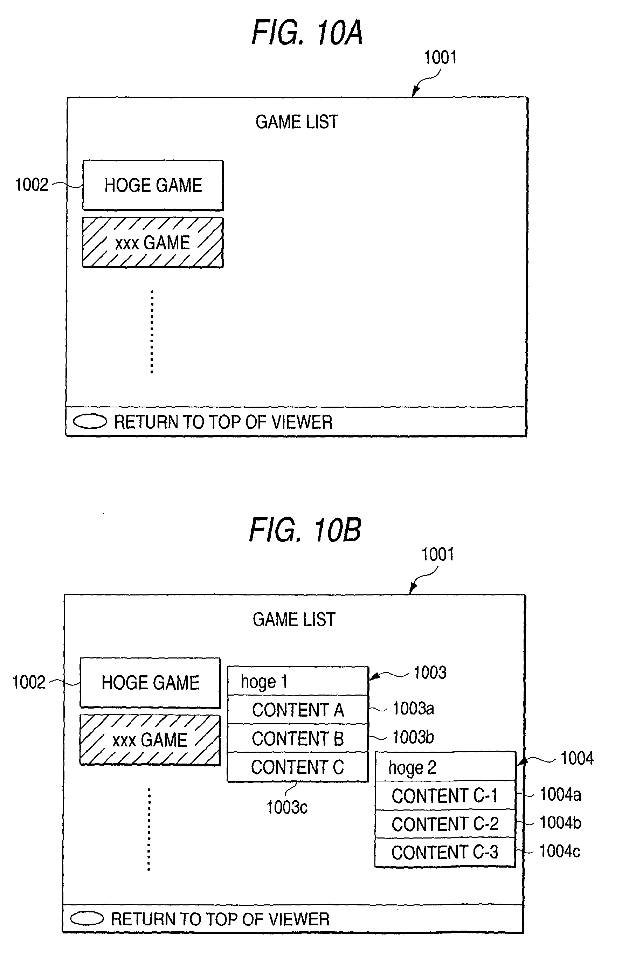

With reference to Figs. 9 and 10, a system of an embodiment will be described, in which a user YOSHIOKA accesses the game A server system 402e for providing an environment for an on-line game named "A" by using the client system 403a. YOSHIOKA obtains game list information contained in a category of the game "A", and displays the obtained game list on the viewer of the client system 403a.

When YOSHIOKA loads a CD-ROM, storing the viewer program, in the game machine body 501, the game machine body 501 activates the viewer.

Since an initial screen of the viewer asks the user to input an account and a password for log-in, the user inputs his/her account and password from a software keyboard, not illustrated (the keyboard is displayed on a screen), or from an externally attached keyboard. Then, the user carries out a selecting operation with the circle mark button 503e to log on the viewer.

The viewer of the embodiment can use four accounts in total, i.e., one master account as an account for log-in and three sub accounts. They are stored in a memory card inserted into the memory card slot 501f in association with passwords, and checked with the account and password entered in logging-in. It is assumed that YOSHIOKA logged on under his master account "yoshioka".

A top screen of the viewer immediately after the log-in is shown in Fig. 9. In Fig.9, a viewer menu screen 901 includes an account 902, a navigator command button 903, a game command button 904, a sports command button 905, a music command button 906, and a cartoon command button 907. At this point in time, the viewer is off-line from the server system group 402.

The user moves the cursor to a desired button (the anchor is moved with the cursor) and carries out the selecting operation by the circle mark button 503e to activate a function relating to a selected button. In this manner, the user carries out the selecting operation for an item where the cursor is located and can activate the function relating to the item.

When the user carries out the selecting operation on the navigator command button 903, activated is a communications tool "navigator" for accessing the message server system 402c, the mail server system 402d and the profile server system 402g to provide a communications service. The navigator is a communications tool in which functions of, for example, a messenger application (hereinafter, simply referred to as messenger), a chat application and a mail application are integrated.

When the user carries out the selecting operation on the sports command button 905, the music command button 906 and the cartoon command button 907, a content viewing tool for obtaining various content information by accessing content server system 402b is activated.

When the user moves the cursor on the game command button 904 and carries out the selecting operation, a game tool for playing a game by accessing the profile server system 402g and the game A server system 402e is activated.

Hereinafter, described will be an operation of the viewer when the user carries out the selecting operation on the game command button 904 and the game tool is activated. When the game tool is activated after the viewer menu screen 901 is displayed, the authentication server system 402a authenticates access to the server system group 402 with the account and password which was required for logging into the viewer.

When the authentication for accessing the server system group 402 is established and the viewer becomes on-line, the viewer accesses the game A server system 402e, and requests the game list information contained in the corresponding game. Then the viewer displays the obtained game list on a display screen of the viewer of the client system 403a. In an embodiment, "HOGE game", "xxx game" and the like are included. The viewer displays the game list that includes their game selection buttons and asks the user to select a game.

Figs.10A and 10B show a viewer screen when the selecting operation is carried out on the game command button 904 and the game tool is activated. In Fig.10A, a game list screen 1001 includes button 1002 having a button name "HOGE game" below the game list named "GAME LIST". In an embodiment, when the user carries out the selecting operation on the button 1002, a pop-up menu is displayed, which includes multiple link buttons to content which are contained in a category of "HOGE game". The button 1002 is a multi-link button which has a function for displaying a menu of multiple links to be linked therefrom.

When the user carries out the selecting operation for the multi-link button "HOGE game" 1002 in Fig. 10A, a pop-up menu "hoge1" 1003 is displayed in the vicinity of the multi-link button "HOGE game" 1002. The pop-up menu "hoge1" 1003 has multiple link buttons to be linked to content contained in the category of "HOGE game", and they are link button "CONTENT A" 1003a, link button "CONTENT B" 1003b, and link button "CONTENT C" 1003c, respectively. In an embodiment, when the user carries out the selecting operation for the button 1003c, a pop-up menu is displayed, which has multiple link buttons to be linked to content contained in the category of "CONTENT C". The button 1003 is a multi-link button which has a function for displaying a menu of multiple links to be linked therefrom.

When the user carries out the selecting operation for the multi-link button "CONTENT C" 1003c in Fig. 10B, a pop-up menu "hoge2" 1004 is displayed in the vicinity of the multi-link button "CONTENT C" 1003c. In this embodiment, the pop-up menu 1004 is displayed not to overlap the button 1003. The pop-up menu "hoge2" 1004 has multiple link buttons to be linked to content contained in the category of "CONTENT C". The buttons are link button "CONTENT C-1" 1004a, link button "CONTENT C-2" 1004b, and link button "CONTENT C-1" 1004c, respectively.

### (DISPLAY SEQUENCE)

Information of the game list screen 1001 is stored in the game A server system 402e as a NML (New markup language) text file described by NML. NML is an HTML based markup language specific to an embodiment of the present invention.

The client system 403a sends a URL designating a storage place of a NML file desired by the user to the server system through the activated viewer and obtains the desired NML file. As the communications protocol, HTTP may be used. The viewer of the client system 403a includes a parser for analyzing a file described by markup language, and for example, has a NML parser for analyzing a NML file. The viewer, after receing the NML file, displays a NML document in the file based upon the analysis result.

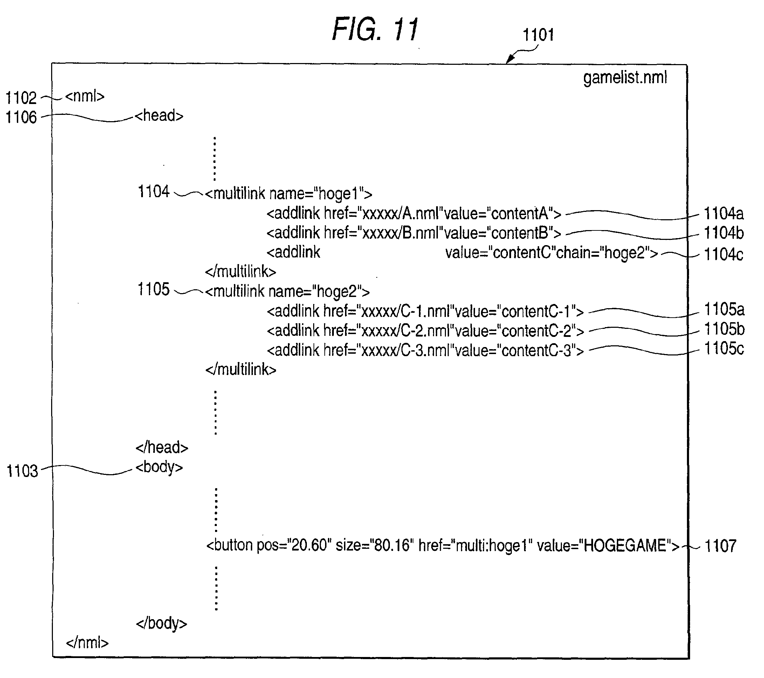

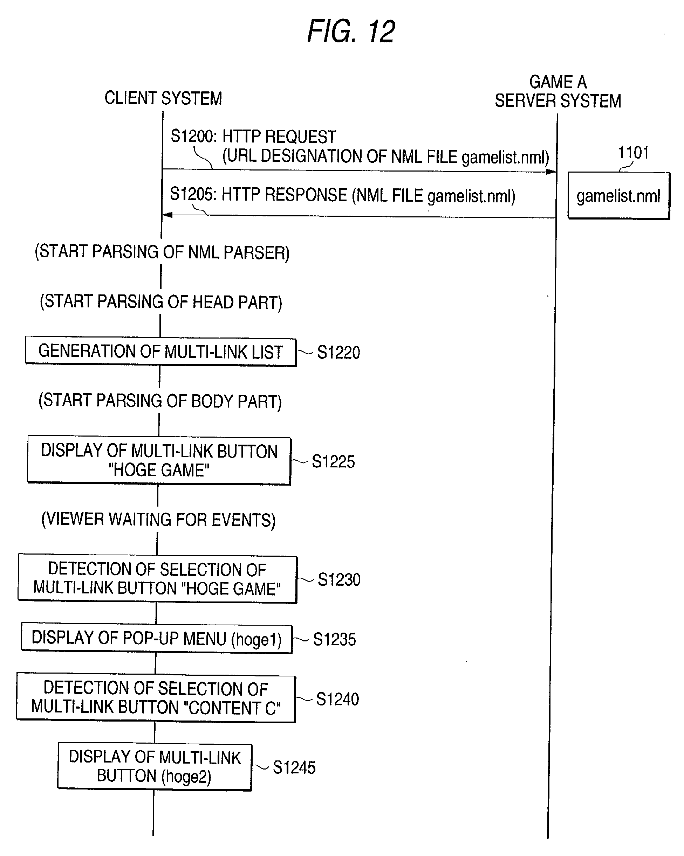

With reference to Figs. 11 and 12, a display sequence will be described, in which the viewer of the client system 403a obtains the NML file on the game list screen 1001 from the game A server system 402e and display the obtained file. Fig.11 shows one example of a NML file stored in the game A server system 402e. Fig.12 is an HTTP sequence diagram between the viewer of the client system 403a and the game A server system 402e.

In Fig.11, a NML file gamelist.nml 1101 includes an <nml> tag 1102, <body> tag 1103, <button pos="20,60" side="80,16" href="multi:hoge1" value="HOGE game"> tag 1107, <head> tag 1106, <multilink name="hoge1"> tag 1104, <addlink href="xxxxx/A.nml" value="CONTENT A"> tag 1104a, <addlink href="xxxxx/B.nml" value="CONTENT B"> tag 1104b, <addlink value="CONTENT C" chain="hoge2"> tag 1104c, <multilink name="hoge2"> tag 1105, <addlink href="xxxxx/C-1.nml" value="CONTENT C-1"> tag 1105a, <addlink href="xxxxx/C-2.nml" value="CONTENT C-2"> tag 1105b, and <addlink href="xxxxx/C-3.nml" value="CONTENT C-3"> tag 1105c.

The <nml> tag 1102 declares that the content between <nml> - </nml> tags is described by NML. The <body> tag 1103 indicates that the content between <body> - </body> tags (hereinafter, BODY part) is a main text to be displayed on the viewer.

Furthermore, data (such as image data) to be referred to by the BODY part is defined in advance by <head> tag 1106 in a portion between <head> - </head> tags (hereinafter, HEAD part). The NML parser first parses the HEAD part, and obtains or generates data defined in the part from the game A server system 402e to store the data in advance in the client system 403a.

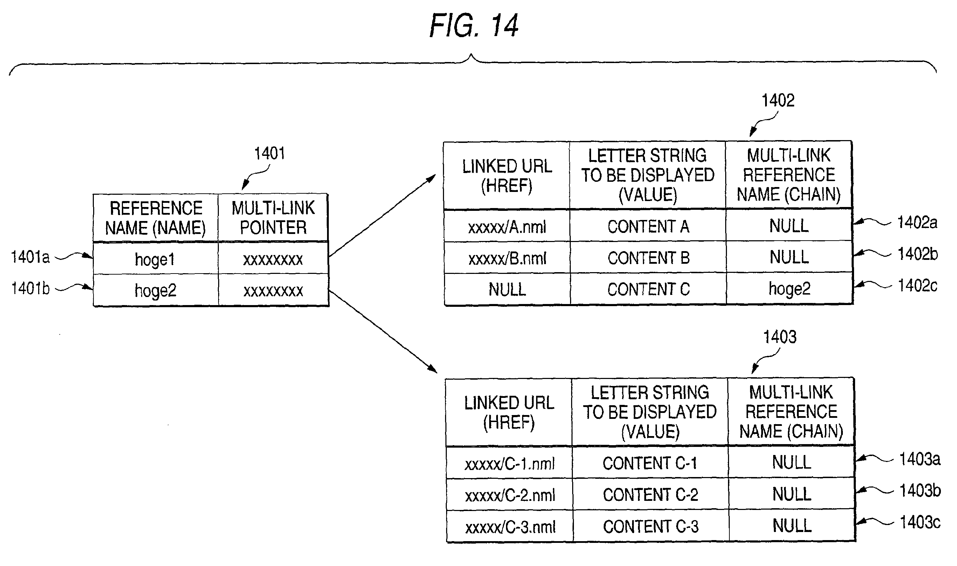

The <multilink name="hoge1"> tag 1104 indicates that, by parsing of the HEAD part as to a portion between it and the </multilink> tag, a multi-link list is in advance stored in the client system 403a with reference name hoge1 of name="hoge1" attached thereto as an index. The multi-link list includes an information record of the link button "CONTENT A" 1003a, an information record of the link button "CONTENT B" 1003b, and an information record of the link button "CONTENT C" 1003c. The information record of the link button "CONTENT A" 1003a stores information of the <addlink href="xxxxx/A.nml" value="CONTENT A" tag 1104a. The information record of the link button "CONTENT B" 1003b stores information of the <addlink href="xxxxx/B.nml" value="CONTENT B" tag 1104b. The information of the link button "CONTENT C" 1003c stores information of the <addlink value="CONTENT C" chain="hoge2"> tag 1104a. The multi-link list will be described in detail below with reference to Fig. 14.

The <multilink name="hoge2"> tag 1105 indicates that, by parsing of the HEAD part as to a portion between the <multilink name="hoge2"> tag 1105 and </multilink> tag, a multi-link list is stored in advance in the client system 403a with reference name hoge2 of name="hoge2" attached thereto as an index. The multi-link list includes an information record of the link button "CONTENT C-1" 1004a, an information record of the link button "CONTENT C-2" 1004b, and an information record an information record of the multi-link button "CONTENT C-3". The information record of the link button stores information of the <addlink href="xxxxx/C-1.nml" value="CONTENT C-1" tag 1105a. The information record of the link button "CONTENT C-2" 1004b stores information of the <addlink href="xxxxx/C-2.nml" value="CONTENT C-2" tag 1105b. The information of the link button "CONTENT C-3" 1004c stores information of the <addlink href="xxxxx/C-3.nml" value="CONTENT C-3"> tag 1105c.

The <button pos="20,60" size="80,16" href="multi:hoge1" value="HOGE game"> tag 1107 indicates that the multi-link button "HOGE game" 1002 is displayed at a start position (20, 60) of xy coordinates with display size of 80 dots width and 16 dots height. Furthermore, the reference name hoge1 indicated by href="multi:hoge1" indicates that the multi-link button "HOGE game" 1002 is linked to the multi-link list defined in the HEAD part and stored in advance in the client system 403a.

Furthermore, the reference name hoge2 indicated by chain="hoge2" in <addlink value="CONTENT C" chain="hoge2"> tag 1104c indicates that the multi-link button "CONTENT C" 1003c is linked to the multi-link list is defined in the HEAD part and stored in advance in the client system 403a.

As shown in Fig.12, the viewer of the client system 403a sends an HTTP request designating the URL of the NML file gamelist.nml 1101 to the game A server system 402e in accordance with instructions of the user (step S1200). The game A server system 402e which received the HTTP request reads out the stored NML file gamelist.nml 1101 and sends an HTTP response to the client system 403a, along with the read-out file (step S1205).

The viewer that received the HTTP response, after obtaining the NML file gamelist.nml 1101, starts parsing of the NML file gamelist.nml 1101 by the NML parser, beginning with the HEAD part.

The viewer generates in RAM, by parsing the portion between <multilink name="hogel"> tag 1104 and </multilink> tag, a multi-link list with reference name hoge1 of name="hoge1" attached thereto as an index (step S1220). The multi-link list includes an information record of the link button "CONTENT A" 1103a, an information record of the link button "CONTENT B" 1003b, and an information record of the multi-link button "CONTENT C" 1003c. The information record of the link button "CONTENT A" 1003a stores information of <addlink href="xxxxx/A.nml" value="CONTENT A" tag 1104a. The information record of the link button "CONTENT B" 1003b stores information of <addlink href="xxxxx/B.nml" value="CONTENT B" tag 1104b. The information record of the multi-link button "CONTENT C" 1003c stores information of <addlink value="CONTENT C" chain="hoge2"> tag 1104a.

Similarly, at step S1220, the viewer generates in RAM, by parsing the portion between <multilink name="hoge2"> tag 1105 and </multiling> tag, a multi-link list, with reference name hoge2 of name="hoge2" attached as an index. The multi-link list includes an information record of the link button "CONTENT C-1" 1004a, an information record of the link button "CONTENT C-2" 1004b, and an information record of the multi-link button "CONTENT C-3" 1004c. The information record of the link button "CONTENT C-1" 1004a stores information of <addlink href="xxxxx/C-1.nml" value="CONTENT C-1"> tag 1105a. The information record of the link button "CONTENT C-2" 1004b stores information of <addlink href="xxxxx/C-2.nml" value="CONTENT C-2"> tag 1105b. The information record of the multi-link button "CONTENT C-3" 1004c stores information of <addlink href="xxxxx/C-3.nml" value="CONTENT C-3"> tag 1105c.

Then, the BODY part is parsed, and when the NML parser parses <button pos="20,60" size="80,16" href="multi:hoge1" value="HOGE game"> tag 1107, the viewer displays the multi-link button "HOGE game" 1002 at the start position (20,60) of the xy coordinate with display size of 80 dots width and 16 dots height (step S1225). At the same time, the viewer stores in RAM the reference name hoge1 of the link address indicated by href="multi:hoge1", in association with the multi-link button "HOGE game" 1002, as the event processing information.

A display screen is shown in Fig.10A. The game list screen 1001 displays the multi-link button "HOGE game" 1002. At this time, an event handler of the viewer is monitoring the occurrence of events.

The viewer, when the event handler detects that the multi-link button "HOGE game" 1002 is selected by the user (step S1230), obtains from RAM the multi-link list with the reference name hoge1 as an index, based upon the reference name hoge1 of the address to be linked which is event processing information of the multi-link button "HOGE game" 1002 saved in the RAM.

Then, the viewer displays the pop-up menu "hoge1" 1003 that corresponds to the obtained multi-link list of the reference name hoge1 (step S1235). At the same time, the viewer stores, in the RAM, a pointer (address in the RAM) of the information record of the link-button "CONTENT A" 1003a, the information record of the link button "CONTENT B" 1003b and the multi-link button "CONTENT C" 1003c, in association with the information records. The pointer is stored as the event processing information of the information records. The information records are included in the multi-link list with the reference name hoge1, which is the data of the pop-up menu "hoge1" 1003.

In this case, as shown in Fig. 10B, the pop-up menu "hoge1" 1003 is displayed in the vicinity of the multi-link button "HOGE game" 1002. At this time, the event handler of the viewer is continuously monitoring the occurrence of events.

The viewer, when the event handler detects that the multi-link button "CONTENT C" 1003C in the pop-up menu "hoge1" 1003 is selected by the selecting operation of the user (step S1240), obtains from RAM the information record of the multi-link button "CONTENT C" 1003c, based upon a pointer of the information record of the button in the multi-link list of the reference name hoge1. Then, the multi-link list with the reference name hoge2 as an index is obtained from RAM, based upon information of the <addlink value="CONTENT C" chain="hoge2"> tag 1104c which is stored in the information record of the obtained multi-link button "CONTENT C" 1003c.

Then, the viewer displays the pop-up menu "hoge2" 1004 that corresponds to the obtained multi-link list of the reference name hoge2 (step S1245). At the same time, the viewer stores, in the RAM, a pointer to the information record of the link-button "CONTENT C-1" 1004a, the information record of the link button "CONTENT C-2" 1004b, and the multi-link button "CONTENT C-3" 1004c, in association with the information records. The pointer is stored as the event processing information of the information records. The information records are included with the multi-link list named hoge1, which is data of the pop-up menu "hoge1" 1003.

In this case, as shown in Fig. 10B, the pop-up menu "hoge2" 1004 is displayed in the vicinity of the multi-link button "CONTENT C" 1003c. In this embodiment, the pop-up menu "hoge2" 1004 is displayed without overlapping the pop-up menu "hoge1" 1003. At this time, the event handler of the viewer is continuously monitoring the occurrence of events.

In the present embodiment, data referred to in the BODY part can be defined, in advance, in the HEAD part of a NML document. When the multi-link data referred in BODY part is defined in advance in the HEAD part, by parsing the HEAD part with the NML parser, the defined multi-link data is stored in advance in the client system 403a as a multi-link list. Then, by analyzing BODY part of the NML document, with the reference name described on an attribute of a button to be displayed, the button is linked to the multi-link list which is defined in the HEAD part and is stored in advance in the client system 403a.

Then, when the viewer detects the selecting operation of a button, the pop-up menu having multiple link buttons is displayed without displaying a new page, based upon the multi-link list linked to the button. Furthermore, by the selecting operation of a link button in the pop-up menu, the pop-up menu having multiple link buttons is further displayed without displaying a new page, based upon the multi-link list linked to the button.

### (CLIENT SYSTEM PROCESSING)

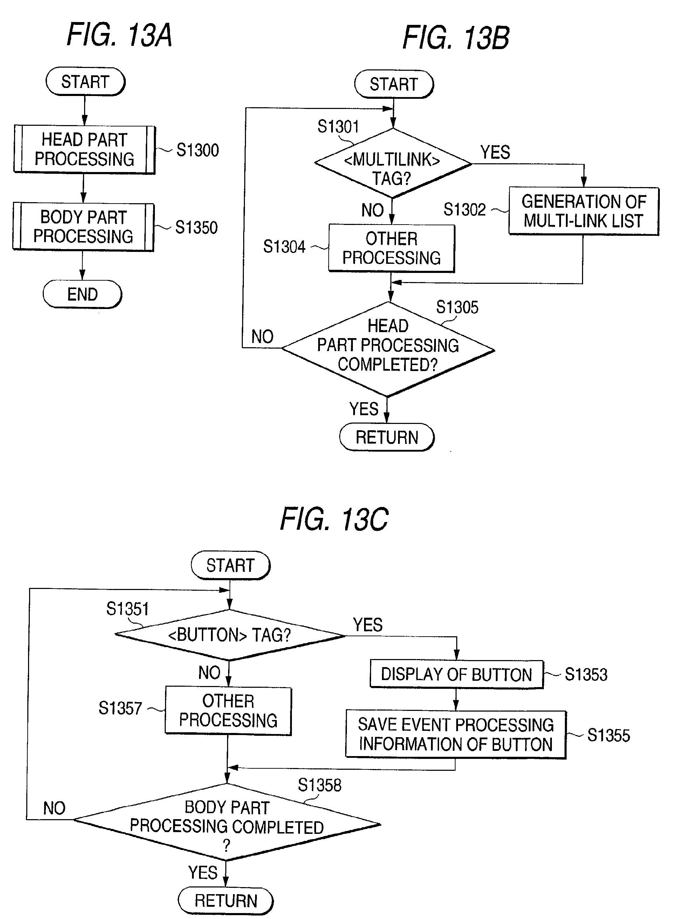

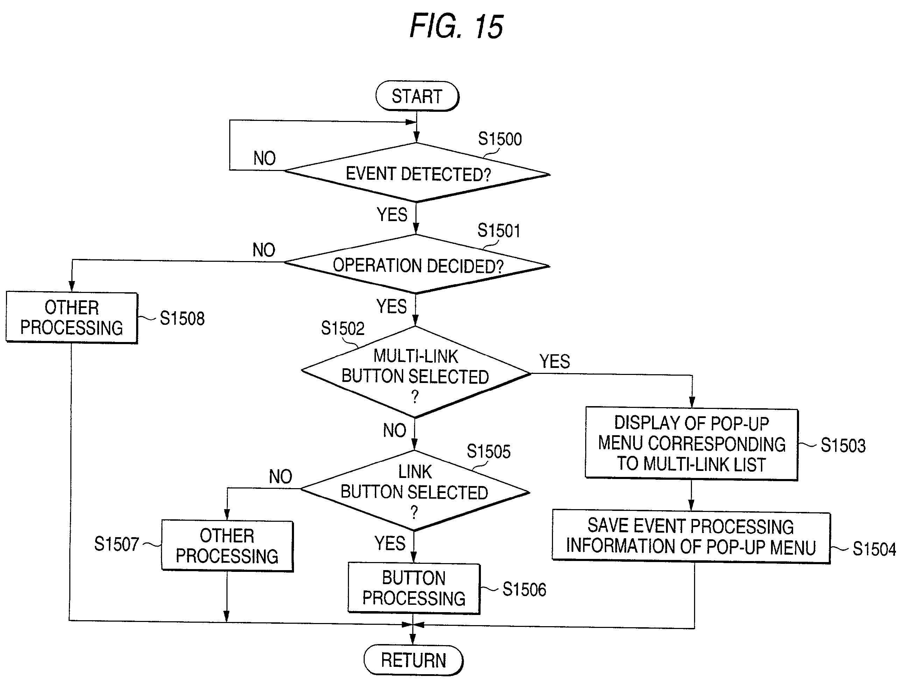

With reference to Figs.13A, 13B, 13C, 14 and 15, an explanation will be given of procedures of a client system when the viewer of the client system 403a obtains and displays the NML file of the game list screen 1001 from the game A server system 402e as stated above. Figs.13A, 13B, 13C and 15 are flowcharts showing procedures in which the client system 403a carries out display control in the embodiment. Fig.14 is an explanatory view of a multi-link list.

In an embodiment, the procedures shown in Figs.13A, 13B, 13C and 15 are carried out by the viewer program which is loaded in RAM of the system memory 501b from a CD-ROM and executed by the CPU 501a which the game machine body 501 of the client system 403a has. More particularly, Figs.13A, 13B and 13C show parsing by the NML parser described with reference to Fig.12. Fig.13A is a flowchart of processing in the NML parser, Fig.13B is a flowchart of processing of the HEAD part, and Fig.13C is a flowchart of processing of the BODY part. Fig.15 shows processing of events by the viewer described with reference to Fig.12.

Fig.14 shows a multi-link list on RAM of the system memory 501b. The multi-link list in the embodiment includes a multi-link list 1402, a multi-link list 1403 and a multi-link table 1401.

The multi-link list 1402 includes, on the basis of parsing the portion between <multilink name="hogel"> tag 1104 and </multilink> tag, the information record 1402a of the link button "CONTENT A" 1003a in which information of <addlink href="xxxxx/A.nml" value="CONTENT A"> tag 1104a is stored, the information record 1402b of the link button "CONTENT B" 1003b, in which information of <addlink href="xxxxx/B.nml" value="CONTENT B"> tag 1104b is stored, and the information record 1402c of the multi-link button "CONTENT C" 1003c, in which information of <addlink value="CONTENT C" chain="hoge2"> tag 1104c is stored.

The multi-link list 1403 includes, on the basis of parsing the portion between <multilink name="hoge2"> tag 1105 and </multilink> tag, the information record 1403a of the link button "CONTENT C-1" 1004a, in which information of <addlink href="xxxxx/C-1.nml" value="CONTENT C-1"> tag 1105a is stored, the information record 1403b of the link button "CONTENT C-2" 1004b, in which information of <addlink href="xxxxx/C-2.nml" value="CONTENT C-2"> tag 1105b is stored, and the information record 1403c of the multi-link button "CONTENT C-3" 1004c, in which information of <addlink href="xxxxx/C-3.nml" value="CONTENT C-3"> tag 1105c is stored.

The multi-link table 1401 includes an address record 1401a in which the pointer (address in RAM) of the multi-link list 1402 is registered with the reference name hogel of name="hogel" as an index. The multi-link table 1401 also includes an address record 1401b in which a pointer of the multi-link list 1403 is registered with the reference name hoge2 of name="hoge2" as an index.

In Fig.13A, the CPU 501a, upon receiving the HTTP response and obtaining the NML file gamelist.nml 1101, starts parsing of the NML file gamelist.nml 1101. At first, the HEAD part is parsed (step S1300) and then, the BODY part is parsed (step S1350).

Fig.13B shows the HEAD part processing of step S1300. In Fig.13B the CPU 501a, upon finding <multilink name="hoge1"> tag 1104 (steps S1301 → S1302), generates in RAM the multi-link list 1402. The multi-link list 1402 includes the information record 1402a of the link button "CONTENT A" 1003a in which information of <addlink href="xxxxx/A.nml" value="CONTENT A"> tag 1104a is stored. The multi-link list 1-1402 also includes the information record 1402b of the link button "CONTENT B" 1003b in whichi information of <addlink href="xxxxx/B.nml" value="CONTENT B"> tag 1104b is stored. The multi-link list 1-1402 further includes the information record 1402c of the multi-link button "CONTENT C" 1003c in which information of <addlink value="CONTENT C" chain="hoge2"> tag 1104c is stored.

Then, the address record 1401a, in which a pointer of the multi-link list 1402 is registered in asscoication with the reference name hoge1 of name="hoge1" as the index, is generated in the multi-link list table 1401 on RAM (step S1302).

Then, the CPU 501a judges whether the HEAD part processing is completed (step S1305). In case that the HEAD part processing is not completed, routine returns to processing of S1301 again.

The CPU 501a, upon finding <multilink name="hoge2"> tag 1105 (steps S1301→S1302), generates in RAM the multi-link list 1403. The multi-link list 1403 includes the information record 1403a of the link button "CONTENT C-1" 1004a in which information of <addlink href="xxxxx/C-1.nml" value="CONTENT C-1"> tag 1105a is stored. The multi-link list 1403 also includes the information record 1403b of the link button "CONTENT C-2" 1004b in which information of <addlink href="xxxxx/C-2.nml" value="CONTENT C-2"> tag 1105b is stored. The multi-link list 1403 further includes the information record 1403c of the multi-link button "CONTENT C-3" 1004c in which information of <addlink href="xxxxx/C-3.nml" value="CONTENT C-3"> tag 1105c is stored.

Then, the address record 1401b, in which a pointer of the multi-link list 1403 is registered in association with the reference name hoge1 of name="hoge2" as an index, is generated in the multi-link list table 1401 on RAM (step S1302).

A condition for generating the multi-link list is shown in Fig.14. Then, the CPU 501a judges whether the HEAD part processing is completed (step S1305). In case that the HEAD part processing is not completed, the routine returns to S1301 again. The CPU 501a, upon finding no <multilink> tag at step S1301, carries out other processing (step S1304) and judges whether the HEAD part processing is completed (step S1305).

The CPU 501a carries out loop processing between S1305 and S1301 until it judges that the HEAD part processing is completed, and when it judges that the HEAD part processing is completed, the routine returns to the processing shown in Fig. 13A (step S1305→Return).

Fig.13C shows the BODY part processing of step S1350. In Fig. 13C, the CPU 501a, upon finding <button pos="20,60" size="80,16" href="multi:hoge1" value="HOGE game"> tag 1107, adjusts the image data of the multi-link button "HOGE game" 1002 at the initial position (20,60) of xy coordinates with display size of 80 dots width and 16 dots height, and sets the layout and temporarily stores it in the frame buffer memory. The CPU 501a then displays the button based upon the information in the frame buffer memory (step S1351 → S1353). Thus, on the game list screen 1001 shown in Fig. 10A, the multi-link button "HOGE game" 1002 is displayed.

Furthermore, the CPU 501a stores in RAM the reference name hoge1 of the link address indicated by href="multi:hoge1" in association with the multi-link button "HOGE game" 1002, as its event processing information (step S1355).

The CPU 501a judges whether the BODY part processing is completed, after step S1355 (step S1358). Furthermore, the CPU 501a carries out other processing in case that it found no <button> tag at step S1351, and judges whether the BODY part processing is completed (step S1358).

The CPU 501a loops between S1358 and S1351 until it judges that the BODY part processing is completed. When it judges that the BODY part processing is completed, the routine returns to the processing shown in Fig. 13A (step S1358 → Return).

In Fig.15, the CPU 501a monitors the occurrence of events and their kinds, after processing of Figs.13A, 13B and 13C. This may be, for example, monitoring of occurrence of events sent from the event driver 832 and their kind by use of the event handler of the viewer program.

The CPU 501a, when detecting an event of the selecting operation (step S1500 → step S1501 → step S1502), judges whether a multi-link button is selected (step S1502). For example, a cursor control API included in various APIs 853 may obtain a cursor position.

When the multi-link button "HOGE game" 1002 is selected, the CPU 501a obtains from RAM the multi-link list 1 of numeral 1402 with the reference name hoge1 as an index, based upon the reference name hoge1 of the link address serving as event processing information of the multi-link button "HOGE game" 1002 stored in RAM (step S1502 → step S1503). Specifically, the CPU 501a obtains the address record 1401a in the multi-link list table 1401 on RAM using the reference name hoge1 as an index, and obtains from RAM the multi-link list 1402 using a multi-link list pointer in the address record 1401a.

Then, the CPU 501a layouts the image data of the pop-up menu "hoge1" 1003 corresponding to the obtained multi-link list 1402 of the reference name hoge1 in the frame buffer memory in which image data of the multi-link button "HOGE game" 1002 is buffered. Then, the CPU further buffers the layout data, and displays the pop-up menu based upon information in the frame buffer memory (step S1503). The pop-up menu, for example, may be displayed by a pop-up drawing API.

At the same time, the CPU 501a stores the pointers to various information records in RAM, in association with the information record 1402a of the link button "CONTENT A" 1003a, the information record 1402b of the link button "CONTENT B" 1003b, and the information record 1402c of the multi-link button "CONTENT C" 1003c included in the multi-link list 1 of numeral 1402 with the reference name hoge1, as their event processing information (step S1504).

In this case, as shown in Fig. 10B, the pop-up menu "hoge1" 1003 is displayed in the vicinity of the multi-link button "HOGE game" 1002. At this time, the CPU 501a is continuously monitoring occurrence of events.

Furthermore, the CPU 501a, when detecting the selecting operation event (step S1500 → step S1501 → step S1502), judges whether the multi-link button is selected (step S1502).

When the multi-link button "CONTENT C" 1003c in the pop-up menu "hoge1" is selected, the CPU 501a obtains from RAM the information record 1402c of the multi-link button "CONTENT C", based upon event processing information of the button stored in RAM, i.e., a pointer of the information record 1402c of the button included in the multi-link list 1402 with the reference name hoge1 (step S1502 → Step S1503). Then, the CPU 501a obtains from RAM the multi-link list 1403 using the multi-link reference name hoge2 stored in the information record 1402c of the obtained multi-link button "CONTENT C" 1003c as an index (step S1503). Specifically, the CPU 501a obtains the address record 1401b in the multi-link list table 1401 in RAM using the reference name hoge2 as an index, and obtains from RAM the multi-link list 2-1403, using the multi-link list pointer in the address record 1401b.

Then, the CPU 501a lays out the image data of the pop-up menu "hoge2" 1004 corresponding to the obtained multi-link list 1403 using the reference name hoge2 in the frame buffer memory in which image data of the multi-link button "HOGE game" 1002 is buffered. The CPU 501a further buffers the layout data, and displays the data based upon information in the frame buffer memory (step S1503).

At the same time, the CPU 501a stores pointers of various information records in RAM, in association with the information record 1403a of the link button "CONTENT C-1" 1004a, the information record 1403b of the link button "CONTENT C-2" 1004b, and the information record 1403c of the multi-link button "CONTENT C-3" 1004c included in the multi-link list 1403 with the reference name hoge2, as their event processing information (step S1504).

In this case, as shown in Fig. 10B, the pop-up menu "hoge2" 1004 is displayed in the vicinity of the multi-link button "CONTENT C" 1003c. The pop-up menu "hoge2" 1004 is displayed without overlapping the multi-link button " CONTENT C" 1003c. At this time, the CPU 501a is continuously monitoring occurrence of events.

Furthermore, the CPU 501a, when detecting the event of the selecting operation (step S1500 → step S1501 → step S1502), judges whether the multi-link button is selected (step S1502).

Here, when the link button "CONTENT A" 1003a in the pop-up menu "hoge1"1003 is selected, the CPU 501a obtains from RAM the information record 1402a of the link button "CONTENT A"1003a, based upon event processing information of the button stored in RAM, i.e., a pointer to the information record 1402a of the button included the multi-link list 1402 with the reference name hoge1 (step S1502 → Step S1505 → step S1506). Then, the CPU 501a sends an HTTP request designating link address URL "xxxxx/A.nml" stored in the information record 1402a of the obtained link button "CONTENT A" 1003a to the game A server system 402e (step S1506). Thus, a new page linked to the link button "CONTENT A" 1003a is obtained.

The CPU 501a, when detecting the selecting operation event (step S1500 → step S1501 → step S1502), judges whether a multi-link button is selected (step S1502). When no button is selected, the CPU 501a carries out processing appropriate to an object to which the selecting operation is conducted (step S1502 → step S1505 → step S1507).

Furthermore, the CPU 501a, when detecting events other than the selecting operation, carries out processing appropriate to the event (step S1500 → step S1501 → step S1508). When no event is detected, the processing is repeated until the event is detected (step S1500: No).

According to the above-described embodiment, multi-link data referred to in the BODY part is defined in advance in the HEAD part of a NML document. By parsing the HEAD part with the NML parser, the defined multi-link data is stored in advance in the client system 403 as a multi-link list. Then, in parsing the BODY part, it is linked to the multi-link list which is defined in the HEAD part and stored in advance in the client system 403a with the reference name described on an attribute of the button to be displayed.

Then, when the viewer detects selecting of a button, without displaying a new page, a pop-up menu having multiple link buttons is displayed, based upon the multi-link list linked to the button. Furthermore, by selecting a link button in the pop-up menu, without displaying a new page, a pop-up menu having multiple link buttons is displayed, based upon the multi-link list linked to the button.

Therefore, when an image of one page is displayed, the viewer will display a menu of links without displaying a new page having multiple links. It is not necessary to obtain from the server system a resource for displaying the menu of multiple links. Accordingly, changing pages one at a time, does not occur when viewing a menu of links, improving operability of the viewer. Also, from the perspective of the overall system, communications between client servers is simplified and reduced.

Furthermore, after using memory capacity in the client system of one page screen, the viewer can display a page having a menu of multiple links without using memory capacity of another page screen. Thus, the memory is effectively used, improving performance of client systems.

In addition to the above-described embodiments, other embodiments may be carried out.

In the above embodiment, the pop-up menu "hoge1" 1003 is displayed based upon the <multilink name="hoge1"> tag 1104 of the NML document. Then, the pop-up menu "hoge2" 1004 based upon the <multilink name="hoge2"> tag 1105 is linked to the button 1003c included in the pop-up menu "hoge1" 1003, by the reference name of chain="hoge2" in the <addlink value="CONTENT C" chain="hoge2"> tag 1104 so that the pop-up menu "hoge2" 1004 may be displayed by selection of the button 1003c.

A person with skill in the art should understand that many levels of nesting of the menus for displaying a pop-up menu from a pop-up menu can be generated by repeating use of chain="reference name" and <multilink name="reference name"> tag in the <addlink> tags.

In the above embodiment, the client system is connected to the game A server system through the communications network, and the NML document is obtained from the game A server system 402e. However, the present invention is applicable to a stand-alone system in which the NML documents are stored in advance.

In the above-described embodiment, the client system is a video game machine for home use, but a PC may be used as the client system. In this case, it is not limited that the viewer is loaded from a CD-ROM, and it may be installed on a hard disk in advance. Further, data for authentication may be stored in a hard disk, instead of a memory card. Furthermore, a mouse or a keyboard may be used instead of the controller.

In the above-described embodiment, the client system is a video game machine for home use, but the client system may be a terminal or a game machine in a game center. In this case, it is not limited that the viewer is loaded from a CD-ROM, and it may be installed in a built-in storage device in advance. Furthermore, data for authentication may be stored in the built-in storage device, instead of a memory card. Furthermore, well-known objects corresponding to the controller may be arbitrarily used as an input device.

In the above-described embodiment, the client system is a video game machine for home use, but the client system may be a portable information terminal such as a cellular telephone, or a PDA (personal digital assistant) . In this case, the viewer may be installed in a built-in ROM in advance. Furthermore, data for authentication may be stored in the built-in flash memory, instead of a memory card. Furthermore, an input key corresponding to the controller may be used as an input device.

In the above-described embodiment, data for authentication is stored in a memory card, but it is not limited thereto and the data for authentication may be stored in a RAM which is equipped with a game machine. Alternatively, an operator may input the data.

Although the invention has been described with reference to several exemplary embodiments, it is understood that the words that have been used are words of description and illustration, rather than words of limitation. Changes may be made within the purview of the appended claims, as presently stated and as amended, without departing from the scope and spirit of the invention in its aspects. Although the invention has been described with reference to particular means, materials and embodiments, the invention is not intended to be limited to the particulars disclosed; rather the invention extends to all functionally equivalent structures, methods, and uses such as are within the scope of the appended claims.

As described above, according to the invention, it is possible to display necessary information easily and promptly.

## Claims

1. A display control method executed by an information processing apparatus which reads a file of a document described by a markup language, parses the document and displays content of the parsed document, wherein the document comprises a first description part describing link group information comprising a plurality of pieces of link address information, the link group information being indicated by an identifier, and a second description part in which object information containing an object associated with the identifier is described, the display control method comprising;
generating, upon parsing the first description part, list data of the plurality of pieces of link address information, corresponding to the link group information identifier;
first displaying, upon parsing the second description part, the object based upon the object information; and
subsequent displaying items that accept a request to display each piece of information indicated by each of the plurality of pieces of link address information, by referring to the generated list data using the identifier associated with the object, when the displayed object is selected.

2. The display control method according to claim 1, wherein
in the first description part, each of the plurality of pieces of link group information is indicated by a different identifier, and at least one piece of the link group information contains other link group information as link address information,
the second description part describing the object information containing the identifier of the link group information containing another identifier of the other link group information as the link address information,
the generating further comprising generating the list data of the plurality of link address information, corresponding to the identifier indicating the plurality of pieces of link address information,
the display control method further comprising third displaying items that accept a request to display each piece of information indicated by each of the plurality of link address information, by referring to the generated list data, when an item is selected which accepts a request to display information indicated by the identifier of other link group information, among the items displayed in the second displaying.

3. The display control method according to claim 1, wherein the subsequent displaying further comprises displaying the items so that the items are overlapped on a display screen that displays the object.

4. The display control method according to claim 2, wherein the third displaying further comprises displaying the items so that they are overlapped on a display screen that displays the object.

5. The display control method according to claim 1, wherein at least one of the plurality of pieces of link address information indicates a document in a server connected through a network,
the display control method further comprising reading the document through the network, when an item is selected which accepts the request to display the document.

6. An information processing apparatus which reads a file of a document described by a markup language, parses the document and displays content of the parsed document, wherein the document comprises a first description part describing link group information comprising a plurality of pieces of link address information, the link group information being indicated by an identifier, and a second description part in which object information containing an object associated with the identifier is described, the information processing apparatus comprising:
a generating system that generates, upon parsing the first description part, list data of the plurality of pieces of link address information, corresponding to the link group information identifier;
a first display system that displays, upon parsing the second description part, the object based upon the object information; and
a second display system that displays items that accept a request to display each piece of information indicated by each of the plurality of pieces of link address information, by referring to the generated list data using the identifier associated with the object, when the displayed object is selected.

7. The information processing apparatus according to claim 6, wherein
in the first description part, each of the plurality of pieces of link address information is indicated by a different identifier, and at least one piece of the link group information contains other link group information as link address information,
the second description part describing the object information containing the identifier of the link group information containing another identifier of the other link group information as the link address information,
the generating system generating the list data of the plurality of link address information, corresponding to the identifier indicating the plurality of pieces of link address information,
the information processing apparatus further comprising third display system that displays items that accept a request to display each piece of information indicated by each of the plurality of link address information, by referring to the generated list data, when an item is selected which accepts a request to display information indicated by the identifier of other link group information, among the items displayed by the second display system.

8. The information processing apparatus according to claim 6, wherein the second display system displays the items so that the items are overlapped on a display screen that displays the object.

9. The information processing apparatus according to claim 7, wherein the third display system displays the items so that they are overlapped on a display screen that displays the object.

10. The information processing apparatus according to claim 6, wherein at least one of the plurality of pieces of link address information indicates a document in a server connected through a network, the information processing apparatus further comprising a reading system that reads the document through the network, when an item is selected which accepts the request to display the document.

11. A recording medium on which recorded is a program for causing a computer to read a file of a document described by a markup language, to parse the document, and to display content of the parsed document, wherein the document comprises a first description part describing link group information comprising a plurality of pieces of link address information, the link group information being indicated by an identifier, and a second description part in which object information containing an object associated with the identifier is described, the program causing the computer to execute:
generating, upon parsing the first description part, list data of the plurality of pieces of link address information, corresponding to the link group information identifier;
first displaying, upon parsing the second description part, the object based upon the object information; and
subsequent displaying items that accept a request to display each piece of information indicated by each of the plurality of pieces of link address information, by referring to the generated list data using the identifier associated with the object, when the displayed object is selected.
